(19) Europäisches Patentamt / European Patent Office / Office européen des brevets

(11) **EP 1 981 203 B1**

(12) **FASCICULE DE BREVET EUROPEEN**

(45) Date de publication et mention
de la délivrance du brevet:
**12.02.2014 Bulletin 2014/07**

(51) Int Cl.:
**H04L 1/00** *(2006.01)*   **H04L 1/06** *(2006.01)*

(21) Numéro de dépôt: **08161551.0**

(22) Date de dépôt: **15.12.2003**

(54) **Procédé et dispositif multi-antennes de transmission de signaux**

Mehrfachantenneneinrichtung und Verfahren zur Übertragung von Signalen

Method and multiple-antenna device for signal transmission

(84) Etats contractants désignés:
**AT BE BG CH CY CZ DE DK EE ES FI FR GB GR HU IE IT LI LU MC NL PT RO SE SI SK TR**

(30) Priorité: **16.12.2002 FR 0216200**

(43) Date de publication de la demande:
**15.10.2008 Bulletin 2008/42**

(62) Numéro(s) de document de la (des) demande(s)
initiale(s) en application de l'article 76 CBE:
**03815115.5 / 1 573 953**

(73) Titulaire: **Orange**
**75015 Paris (FR)**

(72) Inventeurs:
• **Le Nir, Vincent**
**61100 Flers (FR)**
• **Helard, Maryline**
**35700 Rennes (FR)**
• **Le Gouable, Rodolphe**
**35510 Cesson-Sevigne (FR)**

(74) Mandataire: **Cougard, Jean-Marie**
**Cabinet Beau de Loménie**
**158, rue de l'Université**
**75340 Paris Cedex 07 (FR)**

(56) Documents cités:
• **ZAFAR MD ET AL: "Space-time block codes from co-ordinate interleaved orthogonal designs", PROCEEDINGS 2002 IEEE INTERNATIONAL SYMPOSIUM ON INFORMATION THEORY. ISIT 02. LAUSANNE, SWITZERLAND, JUNE 30 - JULY 5, 2002, IEEE INTERNATIONAL SYMPOSIUM ON INFORMATION THEORY, NEW YORK, NY: IEEE, US, 30 juin 2002 (2002-06-30), pages 275-275, XP010601986, ISBN: 0-7803-7501-7**
• **DA SILVA M M ET AL: "Space time block coding for 4 antennas with coding rate 1", IEEE 7TH SYMP. ON SPREAD SPECTRUM TECH. & APPL., vol. 2, 2 septembre 2002 (2002-09-02), - 5 septembre 2002 (2002-09-05), pages 318-322, XP010615483, Prague, CZ**
• **ALAMOUTI S M: "A simple transmit diversity technique for wireless communications", IEEE JOURNAL ON SELECTED AREAS IN COMMUNICATIONS, IEEE INC. NEW YORK, US, vol. 16, no. 8, octobre 1998 (1998-10), pages 1451-1458, XP002100058, ISSN: 0733-8716**

**Description**

La présente invention se situe dans le domaine des systèmes de communication sans fil à plusieurs antennes d'émission, correspondant à des systèmes MIMO (pour Multiple Input Multiple Output en langue anglaise) ou à des systèmes MISO (pour Multiple Input Single Output).

<u>PRESENTATION DE L'ETAT DE LA TECHNIQUE</u>

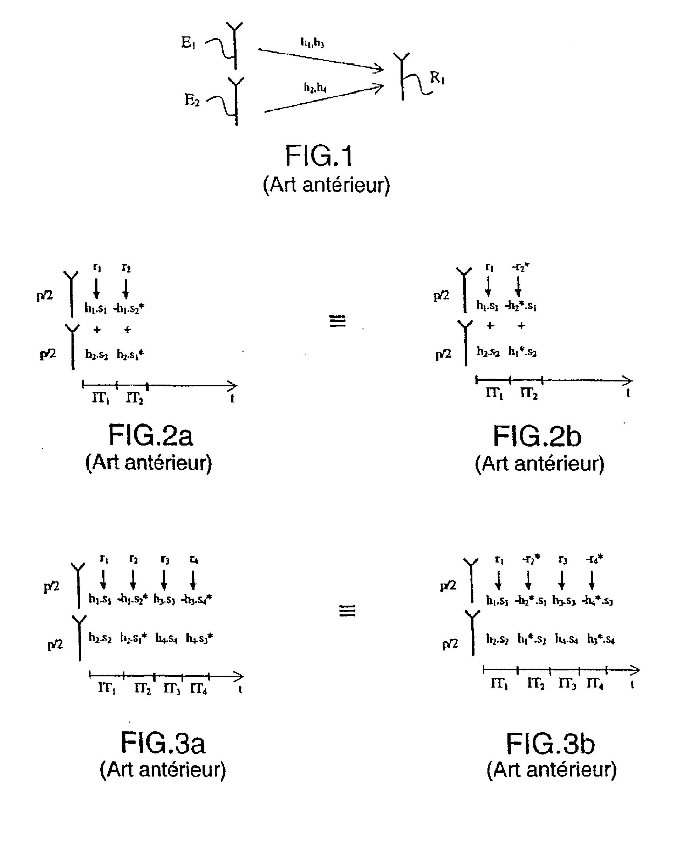

Il est connu d'utiliser plusieurs antennes d'émission dans les systèmes de communication sans fil pour réduire les effets des évanouissements multi-trajets, et augmenter ainsi la qualité de service du système. Cette technique est notamment décrite dans le document [1] intitulé "A simple transmit diversity technique for wireless communications" de S.M Alamouti, IEEE JSAC, Vol.16, NO.8, Octobre 1998. Dans ce document, Alamouti définit un codage espace-temps par blocs permettant d'exploiter au maximum la diversité spatiale dans un système à deux antennes d'émission et M antennes de réception. Ce codage est illustré en regard des figures 1, 2a, 2b, 3a et 3b jointes.

La figure 1 montre un système de communication sans fil comprenant deux antennes d'émission, $E_1$ et $E_2$, et une antenne de réception $R_1$. Chaque antenne d'émission émet un symbole pendant un intervalle temporel de durée T appelé ci-après intervalle d'émission. Pour cette transmission de symboles, les évanouissements sont considérés comme constants sur deux intervalles d'émission consécutifs. Pour des canaux de Rayleigh, on considère donc que le canal entre les antennes $E_1$ et $R_1$ est égal à $h_1 = \alpha_1 e^{j\beta_1}$ pendant les deux premiers intervalles d'émission, notés $IT_1$ et $IT_2$, et à $h_3 = \alpha_3 e^{j\beta_3}$ pendant les deux intervalles d'émission suivants, notés $IT_3$ et $IT_4$. De même, le canal entre les antennes $E_2$ et $R_1$ est égal à $h_2 = \alpha_2 e^{j\beta_2}$ pendant les intervalles $IT_1$ et $IT_2$ et à $h_4 = \alpha_4 e^{j\beta_\leq}$ pendant les intervalles $IT_3$ et $IT_4$.

Le codage espace-temps par blocs exposé dans le document [1] appliqué aux symboles à transmettre est donné ci-après pour 2 cas :

- émission de 2 symboles $s_1$ et $s_2$;
- émission de 4 symboles $s_1$, $s_2$, $s_3$ et $s_4$.

Dans le premier cas, le codage espace-temps du document [1] consiste à transmettre, pendant l'intervalle temporel $IT_1$, simultanément les symboles $s_1$ et $s_2$ puis, pendant l'intervalle temporel $IT_2$, les symboles -$s_2$, et $s_1$ respectivement à partir des antennes $E_1$ et $E_2$. Chaque antenne d'émission émet avec une puissance p/2.

Comme montré à la figure 2a, si on néglige le bruit lors de la transmission, les signaux $r_1$ et $r_2$ reçus par l'antenne de réception $R_1$, respectivement pendant l'intervalle $IT_1$ et l'intervalle $IT_2$, sont alors :

■

$$r_1 = h_1 \cdot s_1 + h_2 \cdot s_2$$

■

$$r_2 = -h_1 \cdot s_2^* + h_2 \cdot s_1^*$$

où * est l'opérateur de conjugaison complexe.

La figure 2b est une représentation linéaire virtuelle mais équivalente du codage espace-temps par blocs de la figure 2a. Elle est obtenue en transformant $r_2$ en $-r_2^*$. La représentation matricielle mathématique du codage espace-temps est alors la suivante:

$$\begin{bmatrix} s_1 & s_2 \end{bmatrix} \cdot \begin{bmatrix} h_1 & -h_2^* \\ h_2 & h_1^* \end{bmatrix}$$

Si, en réception, on applique aux signaux reçus la matrice de décodage $\begin{bmatrix} h_1^* & h_2^* \\ -h_2 & h_1 \end{bmatrix}$, transconjuguée de

la matrice de codage $\begin{bmatrix} h_1 & -h_2^* \\ h_2 & h_1^* \end{bmatrix}$, on obtient :

$$[s_1 \quad s_2] \cdot \begin{bmatrix} h_1 & -h_2^* \\ h_2 & h_1^* \end{bmatrix} \cdot \begin{bmatrix} h_1^* & h_2^* \\ -h_2 & h_1 \end{bmatrix}$$

soit $[s_1 \quad s_2] \cdot \begin{bmatrix} A & 0 \\ 0 & A \end{bmatrix}$ avec $A = |h_1|^2 + |h_2|^2$.

Etant donné que la matrice de codage/décodage $\begin{bmatrix} A & 0 \\ 0 & A \end{bmatrix}$ est une matrice diagonale, les symboles émis sont très faciles à détecter en réception.
Dans le cas d'une émission de 4 symboles $s_1$, $s_2$, $s_3$ et $s_4$, ces derniers sont émis sur 4 intervalles d'émission. Le schéma d'émission est le suivant :

|  | $IT_1$ | $IT_2$ | $IT_3$ | $IT_4$ |
|---|---|---|---|---|
| Antenne $E_1$ | $s_1$ | $-s_2^*$ | $s_3$ | $-s_4^*$ |
| Antenne $E_2$ | $s_2$ | $s_1^*$ | $s_4$ | $s_3^*$ |

Comme montré à la figure 3a, les signaux $r_1$, $r_2$, $r_3$ et $r_4$ reçus par l'antenne de réception $R_1$, respectivement pendant les intervalles $IT_1$, $IT_2$, $IT_3$ et $IT_4$, sont alors:

■

$$r_1 = h_1 \cdot s_1 + h_2 \cdot s_2$$

■

$$r_2 = -h_1 \cdot s_2^* + h_2 \cdot s_1^*$$

■

$$r_3 = h_3 \cdot s_3 + h_4 \cdot s_4$$

■

$$r_4 = -h_3 \cdot s_4^* + h_4 \cdot s_3^*$$

La figure 3b est une représentation linéaire équivalente du codage espace-temps par blocs de la figure 3a. Le codage espace-temps de la figure 3b peut être représentée par le produit de matrices suivant :

$$[s_1 \quad s_2 \quad s_3 \quad s_4] \cdot \begin{bmatrix} h_1 & -h_2^* & 0 & 0 \\ h_2 & h_1^* & 0 & 0 \\ 0 & 0 & h_3 & -h_4^* \\ 0 & 0 & h_4 & h_3^* \end{bmatrix}$$

Si on applique, en réception, à ce produit de matrices la matrice de décodage $\begin{bmatrix} h_1^* & h_2^* & 0 & 0 \\ -h_2 & h_1 & 0 & 0 \\ 0 & 0 & h_3^* & h_4^* \\ 0 & 0 & -h_4 & h_3 \end{bmatrix}$,

obtient:

$$[s_1 \quad s_2 \quad s_3 \quad s_4] \cdot \begin{bmatrix} A & 0 & 0 & 0 \\ 0 & A & 0 & 0 \\ 0 & 0 & B & 0 \\ 0 & 0 & 0 & B \end{bmatrix}$$

avec $A = |h_1|^2 + |h_2|^2$ et $B = |h_3|^2 + |h_4|^2$

De même que pour le cas précédent, la matrice de codage/décodage étant diagonale, il est très facile de détecter en réception les symboles émis.

Le principal inconvénient de ce codage espace-temps est qu'il n'est pas généralisable à un système avec plus de deux antennes d'émission.

Des auteurs, tels que M.M.Da silva et A.Corréia dans leur document [2] intitulé "Space time block coding for 4 antennas with coding rate 1", IEEE 7th Int. Symp. On Spread-Spectrum Tech. And Appl., Prague, 2-5 septembre 2002, ont défini un codage espace-temps pour 4 antennes d'émission.

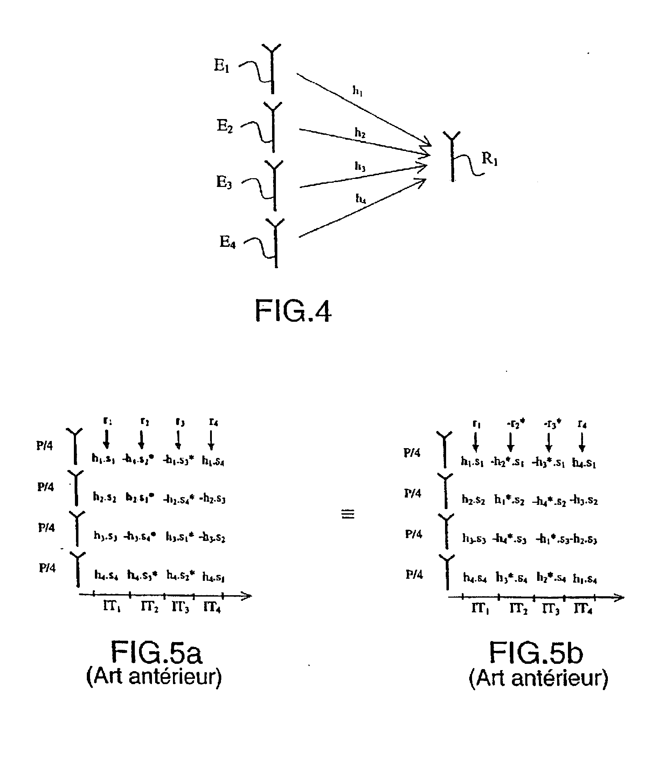

La figure 4 montre un système de communication sans fil comportant 4 antennes d'émission $E_1$, $E_2$, $E_3$ et $E_4$ et 1 antenne de réception $R_1$ dans lequel est appliqué ledit codage.

Le schéma d'émission décrit dans le document [2] est le suivant :

| | $IT_1$ | $IT_2$ | $IT_3$ | $IT_4$ |
|---|---|---|---|---|
| Antenne $E_1$ | $s_1$ | $-s_2^*$ | $-s_3^*$ | $s_4$ |
| Antenne $E_2$ | $s_2$ | $s_1^*$ | $-s_4^*$ | $-s_3$ |
| Antenne $E_3$ | $s_3$ | $-s_4^*$ | $s_1^*$ | $-s_2$ |
| Antenne $E_4$ | $s_4$ | $s_3^*$ | $s_2^*$ | $s_1$ |

Chaque symbole est émis avec une puissance p/4 sur chaque antenne et pour chaque intervalle $IT_i$. Comme montré à la figure 5a, si on néglige les bruits lors de la transmission, les signaux $r_1$, $r_2$, $r_3$ et $r_4$ alors reçus par l'antenne de réception R1, respectivement pendant les intervalles $IT_1$, $IT_2$, $IT_3$ et $IT_4$, sont :

■

$$r_1 = h_1 \cdot s_1 + h_2 \cdot s_2 + h_3 \cdot s_3 + h_4 \cdot s_4$$

4

■

$$r_2 = -h_1 \cdot s_2^* + h_2 \cdot s_1^* - h_3 \cdot s_4^* + h_4 \cdot s_3^*$$

■

$$r_3 = -h_1 \cdot s_3^* - h_2 \cdot s_4^* + h_3 \cdot s_1^* + h_4 \cdot s_2^*$$

■

$$r_4 = h_1 \cdot s_4 - h_2 \cdot s_3 - h_3 \cdot s_2 + h_4 \cdot s_1$$

La figure 5b est une représentation linéaire équivalente du codage espace-temps par blocs de la figure 5a. Le codage espace-temps de la figure 5b peut être représentée par le produit de matrices suivant :

$$
\begin{bmatrix} s_1 & s_2 & s_3 & s_4 \end{bmatrix} \cdot
\begin{bmatrix}
h_1 & -h_2^* & -h_3^* & h_4 \\
h_2 & h_1^* & -h_4^* & -h_3 \\
h_3 & -h_4^* & -h_1^* & -h_2 \\
h_4 & h_3^* & h_2^* & h_1
\end{bmatrix}
$$

Si on applique, en réception, à ce produit de matrices la matrice de décodage

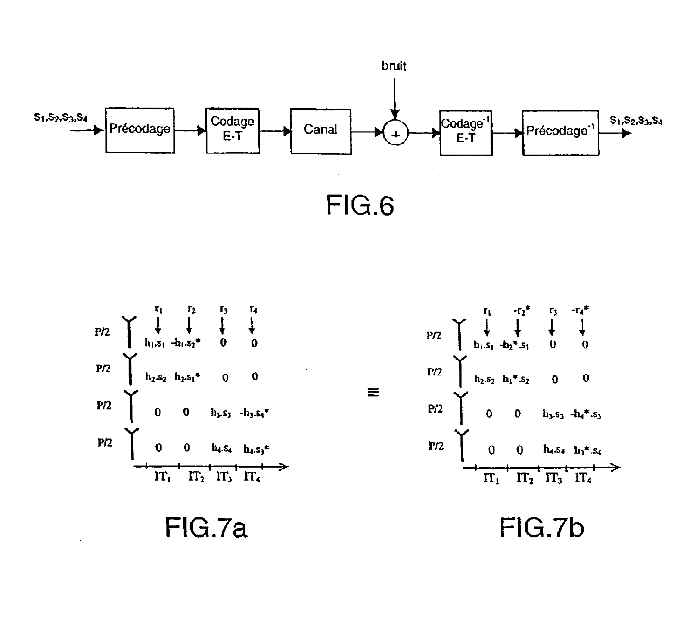

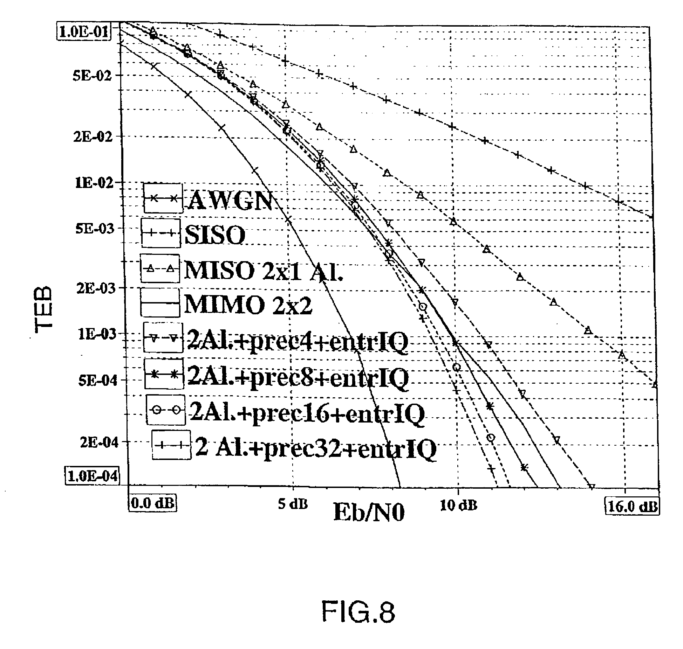

$$
\begin{bmatrix}
h_1^* & h_2^* & h_3^* & h_4^* \\
-h_2 & h_1 & -h_4 & h_3 \\
-h_3 & -h_4 & -h_1 & h_2 \\
h_4^* & -h_3^* & -h_2^* & h_1^*
\end{bmatrix},
$$ on obtient:

$$
\begin{bmatrix} s_1 & s_2 & s_3 & s_4 \end{bmatrix} \cdot
\begin{bmatrix}
A+B & 0 & 0 & \text{In} \\
h_2 & A+B & -\text{In} & 0 \\
0 & -\text{In} & A+B & 0 \\
\text{In} & 0 & 0 & A+B
\end{bmatrix}
$$

avec $\text{In} = 2 \cdot \text{Re}\left\{ h_1 \cdot h_4^* - h_2 \cdot h_3^* \right\}$

La matrice de codage/décodage n'est plus diagonale et comporte des termes dits d'interférence intersymbole. Ces interférences sont très fortes et nécessitent généralement une détection des symboles par un détecteur à maximum de vraisemblance (Maximum Likelihood Detection langue anglaise) complexe à mettre en oeuvre. Afin d'exploiter au mieux la diversité, Da Silva et Correia proposent de précoder les symboles avant leur codage espace-temps.
Ils proposent pour cela d'utiliser une matrice de rotation complexe orthonormale A8 définie de la manière suivante:

**EP 1 981 203 B1**

$$A_8 = \begin{bmatrix} A_4 & A_4 \\ A_4^* & -A_4^* \end{bmatrix} / 2\sqrt{2} \quad \text{avec} \quad A_4 = \begin{bmatrix} e^{j\varphi} & -je^{j\varphi} & e^{j\varphi} & -je^{j\varphi} \\ -je^{-j\varphi} & e^{-j\varphi} & -je^{-j\varphi} & e^{-j\varphi} \\ e^{-j\varphi} & -je^{-j\varphi} & -e^{-j\varphi} & je^{-j\varphi} \\ je^{j\varphi} & e^{j\varphi} & -je^{j\varphi} & -e^{j\varphi} \end{bmatrix}$$

Ce précodage permet de modifier la matrice globale d'émission/réception des symboles tout en gardant la détection des symboles par maximum de vraisemblance.

L'article intitulé "Space-Time Block Codes from Co-ordinate Interleaved Orthogonal Designs" de Md Zafar Ali Khan et B. Sundar Rajan, IEEE International Symposium on Information Theory, New York, 30 juin 2002, décrit un procédé d'émission à partir de plus de deux antennes d'émission et utilisant une technique de codage espace-temps appelée « Co-ordinate interleaved orthogonal designs (CIOD) ». L'auteur propose en fait un schéma spatio temporel basé sur le codage d'Alamouti mais ne considère pas de précodage. Dans cette technique la matrice globale GCLPOD (Generalized Complex Linear Processing Orthogonal Design) doit remplir deux conditions : les symboles émis sur les antennes doivent correspondre à une combinaison linéaire de plusieurs symboles et de leurs conjugués, et la matrice globale doit être orthogonale.

Un but de l'invention est de proposer un procédé permettant de s'affranchir de la détection des symboles par maximum de vraisemblance en réception.

Un autre but de l'invention est de proposer un procédé d'émission de symboles permettant d'émettre avec deux antennes d'émission ou plus et d'avoir en réception une détection simple des symboles émis.

<u>PRESENTATION DE L'INVENTION</u>

Selon l'invention, ces buts sont atteints en effectuant une étape de précodage avec une matrice de précodage particulière permettant d'obtenir, en réception, une détection des symboles par application de la matrice de précodage inverse.

L'invention porte sur un procédé d'émission d'un signal composé d'une pluralité de symboles à partir de ne antennes d'émission, $n_e$ étant un entier supérieur ou égal à 2, comportant les étapes suivantes :

- précoder les symboles à émettre de façon à générer, pour chaque paquet de m symboles consécutifs à émettre, m combinaisons linéaires de symboles, m étant un nombre entier égal à $n_e$, le précodage consistant à appliquer à chaque vecteur de m symboles consécutifs à émettre, une matrice de précodage orthonormée complexe de dimension m x m de manière à former lesdites m combinaisons linéaires de symboles, et
- pour chaque paquet de m symboles consécutifs à émettre, coder lesdites m combinaisons linéaires selon un codage espace-temps de manière à émettre les uns après les autres des blocs de q combinaisons linéaires codées avec q entier inférieur ou égal à m, chaque bloc de q combinaisons linéaires codées étant émis à partir de q' antennes d'émission, q' étant un entier supérieur ou égal à q, chacune des combinaisons linéaires codées dudit bloc de q combinaisons linéaires codées étant émise pendant q" intervalles d'émission temporels consécutifs propres audit bloc à partir de l'une desdites ne antennes d'émission, q" étant un entier supérieur ou égal à q.

Si on utilise le codage espace-temps présenté dans le document [1],

- les combinaisons linéaires codées sont émises par blocs de 2 (q=2) pendant 2 intervalles de temps consécutifs (q"=2);
- les combinaisons linéaires codées sont émises à partir de $n_e$ antennes, $n_e$ allant de 2 à m;
- chaque bloc de deux combinaisons linéaires est émis à partir de deux antennes d'émission (q'=2);
- si $n_e$=m, chaque combinaison linéaire codée est émise à partir d'une antenne d'émission qui lui est propre.

Avantageusement, le procédé comprend en outre, avant l'étape de codage espace-temps, une étape d'entrelacement des combinaisons linéaires pour modifier l'ordre temporel de celles-ci et augmenter ainsi la diversité spatiale des émissions. La taille de la matrice utilisée pour réaliser l'entrelacement est m'x m', avec m' supérieur ou égal à m.

Selon l'invention, l'étape de précodage consiste à appliquer, à chaque vecteur de m symboles consécutifs à émettre, une matrice de précodage orthonormée complexe de dimension mxm de manière à former lesdites m combinaisons linéaires de symboles. Ladite matrice de précodage est de préférence une matrice ou une combinaison de matrices appartenant au groupe spécial unitaire SU(m).

6

Ladite matrice de précodage peut être est le produit de Kronecker d'une matrice de Hadamard d'ordre $\frac{m}{k}$ et d'une matrice du groupe spécial unitaire SU(k), k étant un entier supérieur ou égal à 2.

La matrice du groupe Spécial Unitaire SU(2) peut être du type

$$[SU(2)] = \begin{bmatrix} a & b \\ -b^* & a^* \end{bmatrix} = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix} \text{ avec } \eta = \frac{\pi}{4} + k'\frac{\pi}{2}, \quad \theta_1 = -\theta_2 + \frac{\pi}{2} + k''\pi$$

et $\theta_2 = \theta_1 - \frac{\pi}{2}$, k' et k" étant des entiers relatifs.

En réception, il suffit selon l'invention d'appliquer la matrice de codage espace-temps inverse et la matrice de précodage inverse pour retrouver les symboles émis.

Ainsi, l'invention porte également sur un procédé de réception d'un signal composé d'une pluralité de symboles émis à partir de ne antennes d'émission, $n_e$ étant supérieur ou égal à 2, à l'aide de $n_r$ antennes de réception, $n_r$ étant un entier supérieur ou égal à 1, lesdits symboles étant émis selon le procédé d'émission défini précédemment,

Le procédé consistant à décoder lesdites m combinaisons linéaires codées reçues sur chacune desdites $n_r$ antennes de réception en appliquant une étape de codage espace-temps inverse et une étape de précodage linéaire inverse de celles dudit procédé d'émission de manière à récupérer, à partir desdites m combinaisons linéaires codées émises, les m symboles émis.

Selon une variante, l'étape de précodage inverse consiste à appliquer aux combinaisons linéaires issues du codage espace temps inverse, une matrice de précodage inverse orthonormée complexe, -les m symboles récupérés correspondant au résultat de l'application d'une matrice globale présentant des termes diagonaux proportionnels à une somme de termes diagonaux d'une matrice diagonale, et présentant au moins plusieurs termes non diagonaux proportionnels à une différence entre des termes diagonaux de la matrice diagonale, les autres termes non diagonaux étant nuls, la matrice diagonale correspondant à la transformation des m combinaisons linéaires de symboles en les combinaisons linéaires issues du codage espace-temps inverse.

L'invention porte également sur un autre procédé de réception d'un signal composé d'une pluralité de symboles émis à partir de $n_e$ antennes d'émission, $n_e$ étant supérieur ou égal à 2, à l'aide de $n_r$ antennes de réception, $n_r$ étant un entier supérieur ou égal à 1, lesdits symboles étant émis selon un procédé d'émission mentionné présentant un entrelacement,

Et consistant à décoder lesdites m combinaisons linéaires codées reçues sur chacune desdites $n_r$ antennes de réception en appliquant une étape de codage espace-temps inverse, une étape d'entrelacement inverse et une étape de précodage linéaire inverse de celles dudit procédé d'émission de manière à récupérer, à partir desdites m combinaisons linéaires codées émises, les m symboles émis.

Selon une variante, l'étape de précodage inverse consiste à appliquer aux combinaisons linéaires issues du codage espace temps inverse, une matrice de précodage inverse orthonormée complexe, les m symboles récupérés correspondant au résultat de l'application d'une matrice globale présentant des termes diagonaux proportionnels à une somme de termes diagonaux d'une matrice diagonale, et présentant des termes non diagonaux proportionnels à une différence entre au moins deux termes diagonaux de la matrice diagonale, la matrice diagonale correspondant à la transformation des m combinaisons linéaires de symboles en les combinaisons linéaires issues du codage espace-temps inverse et de l'étape d'entrelacement inverse.

L'invention porte encore sur un système de communication sans fil comprenant des moyens d'émission pour mettre en oeuvre un procédé d'émission de symboles tel que défini ci-dessus, et des moyens pour mettre en oeuvre un procédé de réception de symboles tel que défini ci-dessus.

Ces caractéristiques et avantages de la présente invention, ainsi que d'autres, apparaîtront plus clairement à la lecture de la description suivante, faite en relation avec les dessins annexés, dans lesquels :

- la figure 1, déjà décrite, représente un système de communication sans fil avec deux antennes d'émission et une antenne de réception;
- les figures 2a et 2b, déjà décrites, illustrent la transmission de 2 symboles dans un système à 2 antennes d'émission selon un premier procédé connu ;
- les figures 3a et 3b, déjà décrites, illustrent la transmission de 4 symboles sans précodage dans un système à 2 antennes d'émission selon ledit premier procédé connu;
- la figure 4, déjà décrite, représente un système de communication sans fil avec quatre antennes d'émission et une antenne de réception;
- les figures 5a et 5b, déjà décrites, illustrent la transmission de 4 symboles dans un système à 4 antennes d'émission selon un second procédé connu ;

- la figure 6 représente schématiquement les opérations du procédé d'émission et du procédé de réception selon l'invention;
- les figures 7a et 7b illustrent la transmission de 4 symboles précodés dans un système à 2 ou 4 antennes d'émission selon le procédé d'émission de l'invention; et
- la figure 8 illustre les performances du procédé de l'invention en termes de taux d'erreur binaire.

Dans la suite de la description, $n_e$ et $n_r$ désignent le nombre d'antennes d'émission et le nombre d'antennes de réception du système de communication sans fil.

Par souci de simplification, on va tout d'abord considérer que $n_r=1$.

En référence à la figure 6, l'émission consiste à précoder des paquets de m symboles à émettre avec une matrice de précodage linéaire particulière puis à coder les combinaisons linéaires résultant de cette opération de précodage selon un codage espace-temps. En réception, les symboles reçus sont décodés par application de la matrice de codage espace-temps inverse et de la matrice de précodage inverse.

L'opération de précodage linéaire consiste à appliquer au paquet de m symboles à émettre une matrice de précodage linéaire PREC appartenant au groupe Spécial Unitaire SU (m).

Pour émettre par exemple des paquets de 4 symboles consécutifs, on utilise la matrice PREC suivante :

$$\text{PREC} = \frac{1}{\sqrt{2}}\begin{bmatrix} [\text{SU}(2)] & [\text{SU}(2)] \\ [\text{SU}(2)] & [-\text{SU}(2)] \end{bmatrix}$$

Les matrices du groupe SU(2), notées ci-dessus [SU(2)], sont des matrices carrées de dimension 2 ayant les propriétés suivante :

$$\blacksquare \ [\text{SU}(2)] = \begin{bmatrix} a & b \\ -b^* & a^* \end{bmatrix} \text{ avec det } [\text{SU}_{(2)}]=1 \text{ et où det } [A] \text{ est le déterminant de la matrice } [A] \text{ et a, b sont des}$$

nombres complexes; et

$$\blacksquare \ [\text{SU}(2)]^{-1} = [\text{SU}(2)]^{H} = \begin{bmatrix} a^* & -b \\ b^* & a \end{bmatrix} \text{ où } [\text{SU}(2)]^{H} \text{ est la matrice transconjuguée de la matrice } [\text{SU}(2)].$$

La matrice de précodage PREC, donnée ci-dessus, qui appartient en fait au groupe SU(4), peut être obtenu en effectuant le produit de Kronecker d'une matrice de Hadamard $H_2$ d'ordre 2 et d'une matrice [SU(2)] :

$$\text{PREC} = \frac{1}{\sqrt{2}}\begin{bmatrix} 1 & 1 \\ 1 & -1 \end{bmatrix} \otimes [\text{SU}(2)] = \frac{1}{\sqrt{2}} H_2 \otimes [\text{SU}(2)]$$

On réalise ensuite un codage espace-temps des combinaisons linéaires de symboles issues de l'étape de précodage. Nous illustrerons ci-après le procédé de l'invention en utilisant le codage espace-temps de Alamouti (document [1]). D'autres codes espace-temps tels que celui de décrit dans le document [3] intitulé "Space-time block codes from orthogonal designs" de V.Tarokh, H.Jafarkhani et A.R.Calderbank, IEEE Transactions on Information Theory, Vol. 45, No.5, 1999, pp.1456-1467 peuvent aussi être utilisés.

Avec le codage Alamouti, les combinaisons linéaires sont émises par blocs de deux à partir des antennes d'émission du système. Les blocs de combinaisons linéaires sont émis les uns après les autres pendant deux intervalles d'émission consécutifs à partir de deux antennes d'émission. Chacune des combinaisons linéaires du bloc est émise avec une puissance p/2 à partir d'une des deux antennes d'émission associées audit bloc.

Pour un système à 4 antennes d'émission, les combinaisons linéaires sont émises par exemple par paquets de 4 symboles sur 4 intervalles d'émission consécutifs comme illustré à la figure 7a. Le schéma d'émission est résumé dans la table suivante :

|  | $IT_1$ | $IT_2$ | $IT_3$ | $IT_4$ |
|---|---|---|---|---|
| Antenne $E_1$ | $s_1$ | $-s_2^*$ | 0 | 0 |
| Antenne $E_2$ | $s_2$ | $s_1^*$ | 0 | 0 |
| Antenne $E_3$ | 0 | 0 | $s_3$ | $-s_4^*$ |
| Antenne $E_4$ | 0 | 0 | $s_4$ | $s_3^*$ |

Chaque symbole est émis avec une puissance p/2. Ces combinaisons linéaires peuvent également être émises à partir de 2 antennes d'émission au lieu de 4. On arriverait alors au schéma d'émission de la figure 3a dans lequel les symboles émis seraient précodés. Dans ce cas de figure, les antennes $E_1$ et $E_3$ sont une seule et même antenne. De même, les antennes $E_2$ et $E_4$ sont une seule et même antenne.

Si on néglige le bruit lors de la transmission, les signaux $r_1$, $r_2$, $r_3$ et $r_4$ reçus par l'antenne de réception $R_1$, respectivement pendant les intervalles $IT_1$, $IT_2$, $IT_3$ et $IT_4$, sont :

■

$$r_1 = h_1 \cdot s_1 + h_2 \cdot s_2$$

■

$$r_2 = -h_1 \cdot s_2^* + h_2 \cdot s_1^*$$

■

$$r_3 = h_3 \cdot s_3 + h_4 \cdot s_4$$

■

$$r_4 = -h_3 \cdot s_4^* - h_4 \cdot s_3^*$$

La figure 7b est une représentation linéaire équivalente du codage espace-temps par blocs de la figure 7a. Le codage espace-temps de la figure 7b peut être représentée par le produit de matrices suivant :

$$
\begin{bmatrix} s_1 & s_2 & s_3 & s_4 \end{bmatrix} \cdot
\begin{bmatrix}
h_1 & -h_2^* & 0 & 0 \\
h_2 & h_1^* & 0 & 0 \\
0 & 0 & h_3 & -h_4^* \\
0 & 0 & h_4 & h_3^*
\end{bmatrix}
$$

Après application de la matrice de codage espace-temps inverse $\begin{bmatrix} h_1^* & h_2^* & 0 & 0 \\ -h_2 & h_1 & 0 & 0 \\ 0 & 0 & h_3^* & h_4^* \\ 0 & 0 & -h_4 & h_3 \end{bmatrix}$ et de la matrice

de précodage inverse $\mathrm{PREC}^{-1} = \dfrac{1}{\sqrt{2}} \begin{bmatrix} [SU(2)]^{-1} & [SU(2)]^{-1} \\ [SU(2)]^{-1} & [-SU(2)]^{-1} \end{bmatrix}$, on obtient la matrice globale G suivante :

$$G = \mathrm{PREC} \cdot \begin{bmatrix} A & 0 & 0 & 0 \\ 0 & A & 0 & 0 \\ 0 & 0 & B & 0 \\ 0 & 0 & 0 & B \end{bmatrix} \cdot \mathrm{PREC}^{-1} = \frac{1}{2} \cdot \begin{bmatrix} A+B & 0 & A-B & 0 \\ 0 & A+B & 0 & A-B \\ A-B & 0 & A+B & 0 \\ 0 & A-B & 0 & A+B \end{bmatrix}$$

soit $G = \dfrac{A+B}{2} I + J$

où

- I est la matrice identité 4x4, et
- J matrice est une matrice dite d'interférence définie ainsi :

$$J = \frac{1}{2} \cdot \begin{bmatrix} 0 & 0 & A-B & 0 \\ 0 & 0 & 0 & A-B \\ A-B & 0 & 0 & 0 \\ 0 & A-B & 0 & 0 \end{bmatrix}$$

De façon générale, le coefficient de proportionnalité (en l'occurrence 1/2) dans l'égalité ci-dessus définissant la matrice G provient de la normalisation en puissance et des multiplications des matrices en fonction des tailles des matrices à multiplier.

A noter que cette formulation matricielle s'applique à un système comportant 2 ou 4 antennes d'émission.

Les termes de la diagonale en $\dfrac{A+B}{2} = \dfrac{1}{2}\left(|h_1|^2 + |h_2|^2 + |h_3|^2 + |h_4|^2\right)$ de la matrice G obéissent à

une loi de $\chi_2^8$ canaux de Rayleigh indépendants entre eux). Il est donc très facile de retrouver les symboles en réception.

Les termes d'interférence intersymbole en $\dfrac{A-B}{2} = \dfrac{1}{2}\left(|h_1|^2 + |h_2|^2 - |h_3|^2 - |h_4|^2\right)$ résultent de la différence de deux lois de $\chi_2^4$ . Ces termes sont donc minimes et peuvent être ignorés en réception. Ainsi, les symboles sont donc directement détectés après application de la matrice de précodage inverse. Une détection par maximum de vraisemblance pourrait être utilisée à la place de l'étape de précodage inverse. Cela apporterait des résultats légèrement meilleurs mais augmenterait d'une manière non négligeable la complexité du récepteur.

Les valeurs a et b de la matrice [SU(2)] sont de la forme: $a = e^{i\theta_1} \cdot \cos \eta$ et $b = e^{i\theta_2} \cdot \sin \eta$. Certaines valeurs de $\eta$, $\theta_1$ et $\theta_2$ permettent de réduire le taux d'erreur binaire lors de la transmission des symboles.

De préférence, on choisira $\eta = \dfrac{\pi}{4} + k \cdot \dfrac{\pi}{2}$ afin de pondérer équitablement la diversité exploitée par le codage espace-temps d'Alamouti et $\theta_1 = -\theta_2 + \dfrac{\pi}{2} + k''\pi$ pour maximiser le déterminant de la matrice G et pour minimiser les termes d'interférence. k' et k'' sont des entiers relatifs. Par ailleurs, on a déterminé de manière empirique que les meilleures performances de taux d'erreur binaire sont obtenues pour $\theta_2 = \theta_1 - \dfrac{\pi}{2}$ .

Dans un mode de réalisation préféré, on choisit:

$$\eta = \frac{\pi}{4}$$

$$\theta_1 = \frac{5\pi}{4}$$

$$\theta_2 = \frac{3\pi}{4}$$

La taille de la matrice de précodage PREC peut être étendue à 8x8. La matrice PREC est alors égale à :

$$PREC = \frac{1}{\sqrt{2}} H_4 \otimes \left[ SU(2) \right]$$

où $H_4$ est la matrice de Hadamard d'ordre 4.
Le codage espace-temps est alors effectué sur 2, 4 ou 8 antennes d'émission. Les symboles à émettre sont alors précodés par paquets de 8. L'émission des combinaisons linéaires de ces 8 symboles est effectuée sur 8 intervalles d'émission.
La matrice de codage/décodage est alors la suivante :

$$\begin{bmatrix} A & 0 & 0 & 0 & 0 & 0 & 0 & 0 \\ 0 & A & 0 & 0 & 0 & 0 & 0 & 0 \\ 0 & 0 & B & 0 & 0 & 0 & 0 & 0 \\ 0 & 0 & 0 & B & 0 & 0 & 0 & 0 \\ 0 & 0 & 0 & 0 & C & 0 & 0 & 0 \\ 0 & 0 & 0 & 0 & 0 & C & 0 & 0 \\ 0 & 0 & 0 & 0 & 0 & 0 & D & 0 \\ 0 & 0 & 0 & 0 & 0 & 0 & 0 & D \end{bmatrix}$$

avec A=$|h_1|^2+|h_2|^2$, B=$|h_3|^2+|h_4|^2$, C=$|h_5|^2+|h_6|^2$ et D=$|h_7|^2 + |h_8|^2$ où $h_i$ représente le $i^{ème}$ canal entre l'une des antennes d'émission et l'antenne de réception (canal constant sur 2 intervalles d'émission consécutifs).
La matrice globale G est alors la suivante :

$$\begin{bmatrix}
A+B+C+D & 0 & A-B-C+D & 0 & A+B-C-D & 0 & A-B+C-D & 0 \\
0 & A+B+C+D & 0 & A-B-C+D & 0 & A+B-C-D & 0 & A-B+C-D \\
A-B+C-D & 0 & A+B+C+D & 0 & A-B-C+D & 0 & A+B-C-D & 0 \\
0 & A-B+C-D & 0 & A+B+C+D & 0 & A-B-C+D & 0 & A+B-C-D \\
A+B-C-D & 0 & A-B+C-D & 0 & A+B+C+D & 0 & A-B-C+D & 0 \\
0 & A+B-C-D & 0 & A-B+C-D & 0 & A+B+C+D & 0 & A-B-C+D \\
A-B-C+D & 0 & A+B-C-D & 0 & A-B+C-D & 0 & A+B+C+D & 0 \\
0 & A-B-C+D & 0 & A+B-C-D & 0 & A-B+C-D & 0 & A+B+C+D
\end{bmatrix}$$

De façon générale, en l'absence d'entrelacement, la matrice globale présentera plusieurs termes non diagonaux non nuls car ils sont proportionnels à une différence entre des termes identiques de la matrice diagonale de codage-décodage.

Les termes utiles (à savoir ceux de la diagonale) obéissent à une loi de $\chi_2^{16}$.

Pour une matrice de précodage construite sur le même principe, on aurait en généralisant :

| Matrice de précodage | Taille matrice précodage | Diversité des termes de la diag. | Diversité des termes interférents |
|---|---|---|---|
| $H_2 \otimes SU(2)$ | 4×4 | $\chi_2^8$ | Diff. de $\chi_2^4$ |
| $H_4 \otimes SU(2)$ | 8×8 | $\chi_2^{16}$ | Diff. de $\chi_2^8$ |
| $H_2 \otimes SU(4)$ | 8×8 | $\chi_2^{16}$ | Diff. de $\chi_2^8$ |
| $H_{m/2} \otimes SU(2)$ | m x m | $\chi_2^{2m}$ | Diff. de $\chi_2^m$ |
| $H_{m/k} \otimes SU(k)$ | m x m | $\chi_2^{2m}$ | Diff. de $\chi_2^m$ |

A mesure que le produit m croît, la loi de $\chi_2^{2m}$ tend vers une loi gaussienne (théorème de la limite centrale) et l'exploitation de la diversité est améliorée.

Une caractéristique importante de l'invention est que l'on peut agir de manière indépendante sur le nombre d'antennes d'émission $n_e$ et sur la taille de la matrice de précodage m. Une même taille de matrice de précodage m x m peut s'appliquer à plusieurs nombres d'antennes d'émission, de 2 à m. Dans l'exemple de la figure 7a, on a pris m≥4 et $n_e$=4.

Pour une modulation à $2^M$ états, l'augmentation de l'exploitation de la diversité s'accroît avec la taille de la matrice de précodage, avec une complexité qui augmente avec cette taille de matrice en $m^3$. En utilisant une transformée de Hadamard rapide, on peut transformer cette complexité en m·log(m).

Si on utilise un détecteur à maximum de vraisemblance en réception, la complexité croît en $M^m$.

On peut encore améliorer la diversité du système, en entrelaçant les combinaisons linéaires issues de l'étape de précodage. Un exemple de matrice d'entrelacement ENT de taille 8x8 est donnée ci-après

$$ENT = \begin{bmatrix} 0 & 1 & 0 & 0 & 0 & 0 & 0 & 0 \\ 0 & 0 & 0 & 0 & 1 & 0 & 0 & 0 \\ 0 & 0 & 1 & 0 & 0 & 0 & 0 & 0 \\ 0 & 0 & 0 & 0 & 0 & 0 & 0 & 1 \\ 1 & 0 & 0 & 0 & 0 & 0 & 0 & 0 \\ 0 & 0 & 0 & 0 & 0 & 1 & 0 & 0 \\ 0 & 0 & 0 & 1 & 0 & 0 & 0 & 0 \\ 0 & 0 & 0 & 0 & 0 & 0 & 1 & 0 \end{bmatrix}$$

En réception, une étape de désentrelacement entre l'étape de codage espace-temps inverse et l'étape de précodage inverse. L'étape de désentrelacement est effectuée à l'aide de la matrice $ENT^{-1} = ENT^T$ ($ENT^T$ est la transposée de ENT).

On obtient alors :

$$ENT.\begin{bmatrix} A & 0 & 0 & 0 & 0 & 0 & 0 & 0 \\ 0 & A & 0 & 0 & 0 & 0 & 0 & 0 \\ 0 & 0 & B & 0 & 0 & 0 & 0 & 0 \\ 0 & 0 & 0 & B & 0 & 0 & 0 & 0 \\ 0 & 0 & 0 & 0 & C & 0 & 0 & 0 \\ 0 & 0 & 0 & 0 & 0 & C & 0 & 0 \\ 0 & 0 & 0 & 0 & 0 & 0 & D & 0 \\ 0 & 0 & 0 & 0 & 0 & 0 & 0 & D \end{bmatrix}.ENT^{-1} = \begin{bmatrix} A & 0 & 0 & 0 & 0 & 0 & 0 & 0 \\ 0 & C & 0 & 0 & 0 & 0 & 0 & 0 \\ 0 & 0 & B & 0 & 0 & 0 & 0 & 0 \\ 0 & 0 & 0 & D & 0 & 0 & 0 & 0 \\ 0 & 0 & 0 & 0 & A & 0 & 0 & 0 \\ 0 & 0 & 0 & 0 & 0 & C & 0 & 0 \\ 0 & 0 & 0 & 0 & 0 & 0 & B & 0 \\ 0 & 0 & 0 & 0 & 0 & 0 & 0 & D \end{bmatrix}$$

La matrice globale (précodage, entrelacement, codage, codage inverse, désentrelacement, précodage inverse) du système devient alors :

$$G = \begin{bmatrix} [G_1] & [G_2] \\ [G_2] & [G_1] \end{bmatrix}$$

avec

$$[G_1] = \begin{bmatrix} A+B+C+D & j(A+B-C-D) & A-B+C-D & j(A-B-C+D) \\ -j(A+B-C-D) & A+B+C+D & -j(A-B-C+D) & A-B+C-D \\ A-B+C-D & j(A-B-C+D) & A+B+C+D & j(A+B-C-D) \\ -j(A-B-C+D) & A-B+C-D & -j(A+B-C-D) & A+B+C+D \end{bmatrix}$$

et

$$[G_2] = \begin{bmatrix} 0 & 0 & 0 & 0 \\ 0 & 0 & 0 & 0 \\ 0 & 0 & 0 & 0 \\ 0 & 0 & 0 & 0 \end{bmatrix}$$

Dans le cas d'un entrelacement, la matrice globale G présentera de façon générale plusieurs termes non diagonaux non nuls car ils sont proportionnels à une différence entre des termes différents de la matrice diagonale.

On constate alors que l'entrelacement permet d'obtenir une diversité d'ordre $\chi_2^{16}$ sur la diagonale au lieu de $\chi_2^8$ sans entrelacement.

|  | Entrelacement | Taille matrice précodage | Diversité termes de la diag. | Diversité termes interférents |
|---|---|---|---|---|
| $H_{m/k} \otimes SU(k)$ | Non | mxm | $\chi_2^{2m}$ | Diff. de $\chi_2^{m}$ |
| $H_{m/k} \otimes SU(k)$ | Oui Taille de la matrice d'entrelacement m' x m' avec m'≥m | mxm | $\chi_2^{4m}$ | Diff. de $\chi_2^{2m}$ |

L'invention n'a été décrite que pour un système à 1 antenne de réception. Bien entendu, il peut être appliqué à un système à $n_r$ antennes de réception.

Les performances du procédé de l'invention sont illustrées à la figure 8 par des courbes de taux d'erreur binaire TEB en fonction du rapport signal sur bruit Eb/N0. Cette figure comprend 8 courbes:

■ AWGN : Canal Gaussien;

■ SISO : Système de transmission à 1 antenne d'émission et 1 antenne de réception avec un canal de Rayleigh;

■ MISO 2×1 Al. : Système de transmission à 2 antennes d'émission et 1 antenne de réception avec un canal de Rayleigh utilisant un codage espace-temps en bloc d'Alamouti;

■ MISO 2×2 : Système de transmission à 2 antennes d'émission et 2 antennes de reception avec un canal de Rayleigh utilisant un codage espace-temps en bloc d'Alamouti;

■ 2 Al.+prec4+entrIQ: Système de transmission à 2 antennes d'émission et 1 antenne de réception avec un canal de Rayleigh utilisant un matrice de précodage 4x4 obtenue à partir de matrices SU(2) et un entrelacement IQ (entrelacement différent en phase et en quadrature);

■ 2 Al.+prec8+entrIQ: Système de transmission à 2 antennes d'émission et 1 antenne de réception avec un canal de Rayleigh utilisant un matrice de précodage 8x8 obtenue à partir de matrices SU(2) et un entrelacement IQ (entrelacement différent en phase et en quadrature);

■ 2 Al.+prec16+entrIQ: Système de transmission à 2 antennes d'émission et 1 antenne de réception avec un canal de Rayleigh utilisant un matrice de précodage 16x16 obtenue à partir de matrices SU(2) et un entrelacement IQ (entrelacement différent en phase et en quadrature);

■ 2 Al.+prec32+entrIQ: Système de transmission à 2 antennes d'émission et 1 antenne de réception avec un canal de Rayleigh utilisant un matrice de précodage 32x32 obtenue à partir de matrices SU(2) et un entrelacement IQ (entrelacement différent en phase et en quadrature).

On peut voir que si on augmente la taille de la matrice de précodage, on exploite de mieux en mieux la diversité.

En effet, pour une taille de matrice 4x4, les performances sont meilleures que le système connu d'Alamouti. Avec une taille de matrice plus importante, on dépasse même les performances d'un système à diversité d'ordre 4 optimal qui est le MIMO 2x2 et ce à des rapports signaux sur bruit de plus en plus faibles. Ce système à diversité d'ordre 4 optimal correspondrait s'il existait au code espace-temps à 4 antennes exploitant la diversité maximale.

**Revendications**

1.  Procédé d'émission d'un signal composé d'une pluralité de symboles à partir de $n_e$ antennes d'émission, ne étant un nombre entier supérieur ou égal à 2, **caractérisé en ce qu'**il comprend les étapes suivantes :

    - précoder les symboles à émettre de façon à générer, pour chaque paquet de m symboles consécutifs à émettre, m combinaisons linéaires de symboles, m étant un nombre entier égal au nombre $n_e$ d'antennes d'émission, le précodage consistant à appliquer à chaque vecteur de m symboles consécutifs à émettre, une matrice de précodage orthonormée complexe de dimension m × m, de manière à former lesdites m combinaisons linéaires de symboles, et
    - pour chaque paquet de m symboles consécutifs à émettre, coder lesdites m combinaisons linéaires selon un codage espace-temps, de manière à émettre les uns après les autres des blocs de q combinaisons linéaires codées avec q entier inférieur ou égal à m, chaque bloc de q combinaisons linéaires codées étant émis à partir de q'antennes d'émission, q' étant un entier supérieur ou égal à q, chacune des combinaisons linéaires codées dudit bloc de q combinaisons linéaires codées étant émise pendant q" intervalles d'émission temporels consécutifs propres audit bloc à partir de l'une desdites $n_e$ antennes d'émission, q" étant un entier supérieur ou égal à q.

2.  Procédé selon la revendication 1, **caractérisé en ce que** q, q' et q" sont égaux à 2.

3.  Procédé selon la revendication 2, **caractérisé en ce que** ne est égal à 2.

4.  Procédé selon l'une quelconque des revendications 1 à 3, **caractérisé en ce qu'**il comprend en outre, avant l'étape de codage espace-temps, une étape d'Entrelacement desdites combinaisons linéaires pour modifier l'ordre temporel de celles-ci.

5.  Procédé selon la revendication 4, **caractérisé en ce que** ladite étape d'entrelacement est effectuée à l'aide d'une matrice d'entrelacement de taille m'x m', m' étant supérieur ou égal à m.

6.  Procédé selon l'une quelconque des revendications précédentes, **caractérisé en ce que** la matrice de précodage est une matrice ou une combinaison de matrices appartenant au groupe spécial unitaire SU(m).

7.  Procédé selon la revendication 6, **caractérisé en ce que** ladite matrice de précodage est le produit de Kronecker d'une matrice de Hadamard d'ordre $\dfrac{m}{k}$ et d'une matrice du groupe spécial unitaire SU(k), k étant un entier supérieur ou égal à 2.

8.  Procédé selon la revendication 7, **caractérisé en ce que** la matrice du groupe Spécial Unitaire SU(2) est du type

$$[SU(2)] = \begin{bmatrix} a & b \\ -b^* & a^* \end{bmatrix} = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix} \text{ avec } \eta = \frac{\pi}{4} + k'\frac{\pi}{2}, \quad \theta_1 = -\theta_2 + \frac{\pi}{2} + k''\pi$$

    et $\theta_2 = \theta_1 - \dfrac{\pi}{2}$ , k' et k" étant des entiers relatifs.

9.  Procédé de réception d'un signal composé d'une pluralité de symboles émis à partir de $n_e$ antennes d'émission, $n_e$ étant supérieur ou égal à 2, à l'aide de $n_r$ antennes de réception, $n_r$ étant un entier supérieur ou égal à 1, **caractérisé en ce qu'**il consiste à :

    - réceptionner les uns après les autres sur chacune desdites $n_r$ antennes de réception des blocs de q combinaisons linéaires codées ;

- décoder m combinaisons linéaires en appliquant une étape de codage espace-temps inverse sur les blocs de q combinaisons linéaires codées reçues, m et q étant des entiers tels que q est inférieur ou égal à m et m étant un nombre entier égal au nombre $n_e$ d'antennes d'émission;
- effectuer une étape de précodage linéaire inverse par application d'une matrice de précodage orthonormée complexe auxdites m combinaisons linéaires de manière à récupérer les m symboles émis.

10. Procédé de réception selon la revendication 9, **caractérisé en ce que** :

les m symboles récupérés correspondent au résultat de l'application d'une matrice globale présentant des termes diagonaux proportionnels à une somme de termes diagonaux d'une matrice diagonale, et présentant au moins plusieurs termes non diagonaux proportionnels à une différence entre des termes diagonaux de la matrice diagonale, les autres termes non diagonaux étant nuls, la matrice diagonale correspondant à la transformation des m combinaisons linéaires de symboles en les combinaisons linéaires issues du codage espace-temps inverse.

11. Procédé de réception selon la revendication 9 ou 10, **caractérisé en ce que** les blocs de q combinaisons linéaires codées sont réceptionnés pendant q" intervalles de réception temporels consécutifs propres à chaque bloc, q" étant un entier supérieur ou égal à q.

12. Procédé de réception selon la revendication 9, **caractérisé en ce qu'**il consiste en outre, avant l'étape de précodage linéaire inverse, à appliquer une étape d'entrelacement inverse.

13. Procédé de réception selon la revendication 12, **caractérisé en ce que** :

- l'étape de précodage inverse consiste à appliquer aux combinaisons linéaires issues du codage espace temps inverse, une matrice de précodage inverse orthonormée complexe,
- les m symboles récupérés correspondant au résultat de l'application d'une matrice globale présentant des termes diagonaux proportionnels à une somme de termes diagonaux d'une matrice diagonale, et présentant des termes non diagonaux proportionnels à une différence entre au moins deux termes diagonaux de la matrice diagonale, la matrice diagonale correspondant à la transformation des m combinaisons linéaires de symboles en les combinaisons linéaires issues du codage espace-temps inverse et de l'étape d'entrelacement inverse.

14. Dispositif d'émission d'un signal composé d'une pluralité de symboles à partir de $n_e$ antennes d'émission, ne étant un nombre entier supérieur ou égal à 2, **caractérisé en ce qu'**il comprend au moins :

- des moyens de précodage des symboles à émettre de façon à générer, pour chaque paquet de m symboles consécutifs à émettre, m combinaisons linéaires de symboles, m étant un nombre entier égal à au nombre $n_e$ d'antennes d'émission, le précodage consistant à appliquer à chaque vecteur de m symboles consécutifs à émettre, une matrice de précodage orthonormée complexe de dimension m $\times$ m, de manière à former lesdites m combinaisons linéaires de symboles ; et
- des moyens de codage pour coder lesdites m combinaisons linéaires, pour chaque paquet de m symboles consécutifs à émettre, selon un codage espace-temps de manière à émettre les uns après les autres des blocs de q combinaisons linéaires codées avec q entier inférieur ou égal à m, chaque bloc de q combinaisons linéaires codées étant émis à partir de q' antennes d'émission, q' étant un entier supérieur ou égal à q, chacune des combinaisons linéaires codées dudit bloc de q combinaisons linéaires codées étant émise pendant q" intervalles d'émission temporels consécutifs propres audit bloc à partir de l'une desdites $n_e$ antennes d'émission, q" étant un entier supérieur ou égal à q.

15. Dispositif de réception d'un signal composé d'une pluralité de symboles émis à partir de $n_e$ antennes d'émission, $n_e$ étant supérieur ou égal à 2, à l'aide de $n_r$ antennes de réception, $n_r$ étant un nombre entier supérieur ou égal à 1, **caractérisé en ce qu'**il comprend au moins :

- des moyens pour réceptionner les uns après les autres sur chacune desdites $n_r$ antennes de réception des blocs de q combinaisons linéaires codées;
- des moyens pour décoder m combinaisons linéaires en appliquant un codage espace-temps inverse sur les blocs de q combinaisons linéaires codées reçues, m et q étant des entiers tels que q est inférieur ou égal à m et m étant un nombre entier égal au nombre $n_e$ d'antennes d'émission;
- des moyens pour effectuer un précodage linéaire inverse par application d'une matrice de précodage orthonormée complexe auxdites m combinaisons linéaires de manière à récupérer les m symboles émis.

16. Système de communication sans fil, comprenant un dispositif d'émission selon la revendication 14 et un dispositif de réception selon la revendication 15.

**Patentansprüche**

1. Verfahren zum Senden eines Signals, das aus mehreren Symbolen besteht, ausgehend von $n_e$ Sendeantennen, wobei $n_e$ eine Ganzzahl größer oder gleich 2 ist, **dadurch gekennzeichnet, dass** es die folgenden Schritte aufweist:

   - Vorcodieren der zu sendenden Symbole, so dass für jedes Paket von m aufeinander folgenden zu sendenden Symbolen m lineare Kombinationen von Symbolen erzeugt werden, wobei m eine Ganzzahl gleich der Anzahl $n_e$ von Sendeantennen ist, wobei das Vorcodieren darin besteht, auf jeden Vektor von m aufeinander folgenden zu sendenden Symbolen eine komplexe orthonormierte Vorcodiermatrix mit der Dimension m x m derart anzuwenden, dass die m linearen Kombinationen von Symbolen gebildet werden, und
   - für jedes Paket von m aufeinander folgenden zu sendenden Symbolen die m linearen Kombinationen gemäß einer Raum-Zeit-Codierung derart zu codieren, dass nacheinander die anderen Blöcke aus q codierten linearen Kombinationen gesendet werden, wobei q eine Ganzzahl kleiner oder gleich m ist, wobei jeder Block aus q codierten linearen Kombinationen ausgehend von q' Sendeantennen gesendet wird, wobei q' eine Ganzzahl größer oder gleich q ist, wobei jede der codierten linearen Kombinationen des Blocks aus q codierten linearen Kombinationen während q" aufeinander folgenden zeitlichen Sendeintervallen, die dem Block eigen sind, ausgehend von einer der $n_e$ Sendeantennen gesendet wird, wobei q" eine Ganzzahl größer oder gleich q ist.

2. Verfahren nach Anspruch 1, **dadurch gekennzeichnet, dass** q, q' und q" gleich 2 sind.

3. Verfahren nach Anspruch 2, **dadurch gekennzeichnet**, das $n_e$ gleich 2 ist.

4. Verfahren nach einem der Ansprüche 1 bis 3, **dadurch gekennzeichnet, dass** es ferner vor dem Schritt des Raum-Zeit-Codierens einen Schritt des Verschachtelns der linearen Kombinationen aufweist, um deren zeitliche Reihenfolge zu ändern.

5. Verfahren nach Anspruch 4, **dadurch gekennzeichnet, dass** der Verschachtelungsschritt mit Hilfe einer Verschachtelungsmatrix mit der Größe m'x m' ausgeführt wird, wobei m' größer oder kleiner gleich m ist.

6. Verfahren nach einem der vorhergehenden Ansprüche, **dadurch gekennzeichnet, dass** die Vorcodiermatrix eine Matrix oder eine Kombination von Matrizen ist, die zu der speziellen einzelnen Gruppe SU(m) gehört.

7. Verfahren nach Anspruch 6, **dadurch gekennzeichnet, dass** die Vorcodiermatrix das Kronecker-Produkt einer Hadamard-Matrix mit Rang $\dfrac{m}{k}$ und einer Matrix k der speziellen einzelnen Gruppe SU(k) ist, wobei k eine Ganzzahl größer oder gleich 2 ist.

8. Verfahren nach Anspruch 7, **dadurch gekennzeichnet, dass** die Matrix der speziellen einzelnen Gruppe SU (2) des Typs $[SU(2)] = \begin{bmatrix} a & b \\ -b^* & a^* \end{bmatrix} = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix}$ ist, wobei $\eta = \dfrac{\pi}{4} + k'\dfrac{\pi}{2}$, $\theta_1 = -\theta_2 + \dfrac{\pi}{2} + k''\pi$ und $\theta_2 = \theta_1 - \dfrac{\pi}{2}$, wobei k' und k" relative Ganzzahlen sind.

9. Verfahren zum Empfangen eines Signals, das aus mehreren Symbolen besteht, die ausgehend von $n_e$ Sendeantennen gesendet werden, wobei $n_e$ größer oder gleich 2 ist, mit Hilfe von $n_r$ Empfangsantennen, wobei $n_r$ eine Ganzzahl größer oder gleich 1 ist,
   **dadurch gekennzeichnet, dass** es aus Folgendem besteht:

   - nacheinander Empfangen der Blöcke aus q codierten linearen Kombinationen auf jeder der $n_r$ Empfangsan-

tennen;
- Decodieren von m linearen Kombinationen durch Anwenden eines umgekehrten Raum-Zeit-Codierschritts auf den empfangenen Blöcken aus q codierten linearen Kombinationen, wobei m und q Ganzzahlen derart sind, dass q kleiner oder gleich m ist und m eine Ganzzahl gleich der Anzahl $n_e$ von Sendeantennen ist;
- Ausführen eines umgekehrten linearen Vorcodierschritts durch Anwenden einer komplexen orthonormierten Vorcodiermatrix auf die m linearen Kombinationen derart, dass die m gesendeten Symbole zurückgewonnen werden.

**10.** Empfangsverfahren nach Anspruch 9, **dadurch gekennzeichnet:**

**dass** die m zurückgewonnenen Symbole dem Ergebnis des Anwendens einer globalen Matrix entsprechen, die diagonale Glieder aufweist, die zu einer Summe diagonaler Glieder einer diagonalen Matrix proportional sind, und mindestens mehrere nicht diagonale Glieder aufweist, die zu einem Unterschied zwischen diagonalen Gliedern der diagonalen Matrix proportional sind, wobei die anderen nicht diagonalen Glieder gleich null sind, wobei die diagonale Matrix der Umformung der m linearen Kombinationen von Symbolen in die linearen Kombinationen entspricht, die aus dem umgekehrten Raum-Zeit-Codieren hervorgehen.

**11.** Empfangsverfahren nach Anspruch 9 oder 10, **dadurch gekennzeichnet, dass** die Blöcke aus q codierten linearen Kombinationen während q" aufeinander folgenden zeitlichen Empfangsintervallen, die jedem Block eigen sind, empfangen werden, wobei q" eine Ganzzahl größer oder gleich q ist.

**12.** Empfangsverfahren nach Anspruch 9, **dadurch gekennzeichnet, dass** es ferner darin besteht, vor dem Schritt des umgekehrten linearen Vorcodierens einen umgekehrten Verschachtelungsschritt anzuwenden.

**13.** Empfangsverfahren nach Anspruch 12, **dadurch gekennzeichnet:**

- **dass** der Schritt des umgekehrten Vorcodierens darin besteht, auf die linearen Kombinationen, die aus dem umgekehrten Raum-Zeit-Codieren hervorgehen, eine komplexe orthonormierte umgekehrte Vorcodiermatrix anzuwenden,
- **dass** die m zurückgewonnenen Symbole dem Ergebnis des Anwendens einer globalen Matrix entsprechen, die diagonale Glieder aufweist, die zu einer Summe diagonaler Glieder einer diagonalen Matrix proportional sind, und nicht diagonale Glieder aufweist, die zu einem Unterschied zwischen mindestens zwei diagonalen Gliedern der diagonalen Matrix proportional sind, wobei die diagonale Matrix dem Umformen der m linearen Kombinationen von Symbolen in die linearen Kombinationen, die aus dem umgekehrten Raum-Zeit-Codieren und dem umgekehrten Verschachtelungsschritt hervorgehen, entspricht.

**14.** Vorrichtung zum Senden eines Signals, das aus mehreren Symbolen besteht, ausgehend von $n_e$ Sendeantennen, wobei $n_e$ eine Ganzzahl größer oder gleich 2 ist, **dadurch gekennzeichnet, dass** sie mindestens Folgendes aufweist:

- Mittel zum Vorcodieren der zu sendenden Symbole, so dass für jedes Paket aus m aufeinander folgenden zu sendenden Symbolen m lineare Kombinationen von Symbolen erzeugt werden, wobei m eine Ganzzahl gleich der Anzahl $n_e$ von Sendeantennen ist, wobei das Vorcodieren darin besteht, auf jeden Vektor von m aufeinander folgenden zu sendenden Symbolen eine komplexe orthonormierte Vorcodiermatrix mit Dimension m x m derart anzuwenden, dass die m Kombinationen linearer Symbole gebildet werden, und
- Mittel, um die m linearen Kombinationen für jedes Paket aus m aufeinander folgenden zu sendenden Symbolen gemäß einer Raum-Zeit-Codierung derart zu codieren, dass nacheinander Blöcke aus q codierten linearen Kombinationen gesendet werden, wobei q eine Ganzzahl kleiner oder gleich m ist, wobei jeder Block aus q codierten linearen Kombinationen ausgehend von q' Sendeantennen gesendet wird, wobei q' eine Ganzzahl größer oder gleich q ist, wobei jede der codierten linearen Kombinationen des Blocks aus q linearen Kombinationen während q" zeitlichen aufeinander folgenden Sendeintervallen, die dem Block eigen sind, ausgehend von einer der $n_e$ Sendeantennen gesendet wird, und wobei q" eine Ganzzahl größer oder gleich q ist.

**15.** Empfangsvorrichtung für ein Signal, das aus mehreren Symbolen besteht, die ausgehend von $n_e$ Sendeantennen gesendet werden, wobei $n_e$ größer oder gleich 2 ist, mit Hilfe von $n_r$ Empfangsantennen, wobei $n_r$ eine Ganzzahl größer oder gleich 1 ist, **dadurch gekennzeichnet, dass** sie mindestens Folgendes aufweist:

- Mittel, um nacheinander auf jeder der $n_r$ Empfangsantennen Blöcke aus q codierten linearen Kombinationen zu empfangen;

- Mittel zum Decodieren m linearer Kombinationen, indem eine umgekehrte Raum-Zeit-Codierung auf die empfangenen Blöcke aus q codierten linearen Kombinationen angewandt wird, wobei m und q Ganzzahlen derart sind, dass q kleiner oder gleich m ist und m eine Ganzzahl gleich der Anzahl $n_e$ von Sendeantennen ist;

- Mittel zum Ausführen eines umgekehrten linearen Vorcodierens durch Anwenden einer komplexen orthonormierten Vorcodiermatrix auf die m linearen Kombinationen, so dass die m gesendeten Symbole zurückgewonnen werden.

16. Drahtloses Kommunikationssystem, das eine Sendevorrichtung nach Anspruch 14 und eine Empfangsvorrichtung nach Anspruch 15 aufweist.

**Claims**

1. Method of transmitting a signal composed of a plurality of symbols from $n_e$ transmitting antennas, $n_e$ being an integer greater than or equal to 2, **characterized in that** it comprises the following stages:

    - pre-encode the symbols to be transmitted so as to generate, for each burst of m consecutive symbols to be transmitted, m linear combinations of symbols, m being an integer equal to the number $n_e$ of transmitting antennas, the pre-encoding consisting in applying to each vector of m consecutive symbols to be transmitted a complex orthonormal pre-encoding matrix of dimension m x m, so as to create the said m linear combinations of symbols, and

    - for each burst of m consecutive symbols to be transmitted, code the said m linear combinations according to a space-time coding, so as to transmit one after the other blocks of q coded linear combinations, q being an integer less than or equal to m, each block of q coded linear combinations being transmitted from q' transmitting antennas, q' being an integer greater than or equal to q, each of the coded linear combinations of the said block of q coded linear combinations being transmitted during q" consecutive temporal transmitting intervals specific to the said block from one of the said $n_e$ transmitting antennas, q" being an integer greater than or equal to q.

2. Method according to Claim 1, **characterized in that** q, q' and q" are equal to 2.

3. Method according to Claim 2, **characterized in that** $n_e$ is equal to 2.

4. Method according to any one of Claims 1 to 3, **characterized in that** it further comprises, prior to the space-time coding stage, an interleaving stage of the said linear combinations to modify the temporal order of the latter.

5. Method according to Claim 4, **characterized in that** the said interleaving stage is performed with the aid of an interleaving matrix of dimension m' x m', m' being greater than or equal to m.

6. Method according to any one of the previous claims, **characterized in that** the pre-encoding matrix is a matrix or a combination of matrices belonging to the Special Unitary group SU(m).

7. Method according to Claim 6, **characterized in that** the said pre-encoding matrix is the Kronecker product of a Hadamard matrix of order $\dfrac{m}{k}$ and a matrix of the Special Unitary group SU(k), k being an integer greater than or equal to 2.

8. Method according to Claim 7, **characterized in that** the matrix of the Special Unitary group SU(2) is of type

$$[SU(2)] = \begin{bmatrix} a & b \\ -b^* & a^* \end{bmatrix} = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix} \text{ with}$$

$$\eta = \frac{\pi}{4} + k'\frac{\pi}{2}, \quad \theta_1 = -\theta_2 + \frac{\pi}{2} + k''\pi \text{ and } \theta_2 = \theta_1 - \frac{\pi}{2}, \text{ k' and k" being relative integers.}$$

9. Method of receiving a signal composed of a plurality of symbols transmitted from $n_e$ transmitting antennas, $n_e$ being

greater than or equal to 2, with the aid of $n_r$ receiving antennas, $n_r$ being an integer greater than or equal to 1, **characterized in that** it consists in:

- receiving one after the other on each of the said $n_r$ receiving antennas blocks of q coded linear combination;
- decoding m linear combinations by applying an inverse space-time coding stage to the blocks of q coded linear combinations received, m and q being integers such that q is less than or equal to m and m being an integer equal to the number $n_e$ of transmitting antennas;
- carrying out an inverse linear pre-encoding stage by applying a complex orthonormal pre-encoding matrix to the said m linear combinations in order to retrieve the m symbols transmitted.

10. Method of receiving according to claim 9, **characterized in that**:

the m retrieved symbols corresponding to the result of the application of a global matrix with diagonal elements proportional to a sum of diagonal elements of a diagonal matrix, and with at least several non diagonal elements proportional to a difference between diagonal elements of the diagonal matrix, the other non diagonal elements being zero, the diagonal matrix corresponding to the transformation of the m linear combinations of symbols into the linear combinations derived from the inverse space-time coding.

11. Method of receiving according to Claim 9 or 10, **characterized in that**:

the blocks of q encoded linear combinations are received during q" consecutive reception time intervals specific to each block, q" being an integer greater than or equal to q.

12. Method of receiving according to Claim 9, **characterized in that**
it consists moreover, before the inverse linear pre-encoding stage, in applying an inverse interleaving stage.

13. Method of receiving according to Claim 12, **characterized in that**:

- the inverse pre-encoding stage consists in applying to the linear combinations derived from the inverse space-time coding a complex orthonormal inverse pre-encoding matrix,
- the m retrieved symbols corresponding to the result of the application of a global matrix with diagonal elements proportional to a sum of diagonal elements of a diagonal matrix, and with non diagonal elements proportional to a difference between at least two diagonal elements of the diagonal matrix, the diagonal matrix corresponding to the transformation of the m linear combinations of symbols into the linear combinations derived from the inverse space-time coding and from the inverse interleaving stage.

14. Device for transmitting a signal composed of a plurality of symbols from $n_e$ transmitting antennas, $n_e$ being an integer greater than or equal to 2, **characterized in that** it comprises at least:

- means for pre-encoding the symbols to be transmitted in such a way as to generate, for each packet of m consecutive symbols to be transmitted, m linear combinations of symbols, m being an integer equal to the number $n_e$ of transmitting antennas, the pre-encoding consisting in applying to each vector of m consecutive symbols to be transmitted, a complex orthonormal pre-encoding matrix of dimension m x m, so as to form said m linear combinations of symbols; and
- means of encoding for encoding said m linear combinations, for each packet of m consecutive symbols to be transmitted, according to a space-time coding so as to transmit one after the other blocks of q coded linear combinations, q being an integer less than or equal to m, each block of q coded linear combinations being transmitted from q' transmitting antennas, q' being an integer greater than or equal to q, each of the coded linear combinations of the said block of q coded linear combinations being transmitted during q" consecutive temporal transmitting intervals specific to the said block from one of the said $n_e$ transmitting antennas, q" being an integer greater than or equal to q.

15. Device for receiving a signal composed of a plurality of symbols transmitted from $n_e$ transmitting antennas, $n_e$ being greater than or equal to 2, with the aid of $n_r$ receiving antennas, $n_r$ being an integer greater than or equal to 1, **characterized in that** it comprises at least:

- means for receiving one after the other on each of said $n_r$ receiving antennas blocks of q encoded linear combinations;

- means for decoding m linear combinations by applying an inverse space-time coding to the blocks of q encoded linear combinations received, m and q being integers such that q is less than or equal to m and m being an integer equal to the number $n_e$ of transmitting antennas;
- means for carrying out an inverse linear pre-encoding by applying a complex orthonormal pre-encoding matrix to said m linear combinations so as to retrieve the m symbols transmitted.

16. Wireless communications system comprising a device for transmitting according to Claim 14 and a device for receiving according to Claim 15.

FIG.1
(Art antérieur)

FIG.2a
(Art antérieur)

FIG.2b
(Art antérieur)

FIG.3a
(Art antérieur)

FIG.3b
(Art antérieur)

FIG.4

FIG.5a
(Art antérieur)

FIG.5b
(Art antérieur)

EP 1 981 203 B1

bruit

$s_1,s_2,s_3,s_4$ → Précodage → Codage E-T → Canal → ⊕ → Codage⁻¹ E-T → Précodage⁻¹ → $s_1,s_2,s_3,s_4$

FIG.6

FIG.7a

FIG.7b

24

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S.M ALAMOUTI.** A simple transmit diversity technique for wireless communications. *IEEE JSAC,* Octobre 1998, vol. 16 (8
- Space time block coding for 4 antennas with coding rate 1. *IEEE 7th Int. Symp. On Spread-Spectrum Tech. And Appl., Prague,* 02 Septembre 2002
- **MD ZAFAR ; ALI KHAN ; B. SUNDAR RAJAN.** Space-Time Block Codes from Co-ordinate Interleaved Orthogonal Designs. *IEEE International Symposium on Information Theory, New York,* 30 Juin 2002
- **V.TAROKH ; H.JAFARKHANI ; A.R.CALDERBANK.** Space-time block codes from orthogonal designs. *IEEE Transactions on Information Theory,* 1999, vol. 45 (5), 1456-1467